# EUROPÄISCHE PATENTANMELDUNG

(11) **EP 1 496 275 A2**
(43) Veröffentlichungstag der Anmeldung: **12.01.2005**
(21) Anmeldenummer: 04102888.7
(22) Anmeldetag: 22.06.2004
(51) Int. Cl.: F16C 11/04

(54) **Gelenkverbindung**

(30) Priorität: 08.07.2003 DE 10330688
(71) Anmelder: MANN+HUMMEL GmbH, 71638 Ludwigsburg (DE)
(72) Erfinder: Bartel, Walther, 70188, Stuttgart (DE); Gessner, Klaus, 75417, Mühlacker (DE); Klotz, Arthur, 71686, Remseck (DE); Steiner, Günter, 71549, Auenwald (DE); Traichel, Dirk, 74321, Bietigheim-Bissingen (DE); Wagner, Werner, 71691, Freiberg (DE); Zirnig, Günter, 71679, Asperg (DE)

(57) **Zusammenfassung**

Die Erfindung betrifft eine Gelenkverbindung zur Verbindung einer Schubstange mit einem Mitnehmer, wobei die Schubstange mit einem Aktuator verbunden ist und der Mitnehmer korrespondierend mit wenigstens einer Schaltklappe oder -welle verbunden ist, wobei ein Schubstangenverbindungsstück im Verbindungspunkt mit dem Mitnehmer zumindest teilweise scheibenförmig gestaltet ist und der Mitnehmer am Verbindungspunkt mit der Schubstange korrespondierend zum Schubstange nverbindungsstück geformt ist, wobei ein zylindrischer Anteil des Schubstangenverbindungsstückes im Mitnehmer gelagert ist und der zumindest teilweise scheibenförmige Anteil des Schubstangenverbindungsstückes in eine entsprechend, geformte Nut im Mitnehmer, die sich über einen Winkelbereich um die Lagerstelle für den zylindrischen Anteil des Schubstangenverbindungstückes erstreckt, eingreift, so dass die Schubstange radial und axial gegen ein relatives Verschieben gegenüber dem Mitnehmer gesichert ist.

## Beschreibung

Die Erfindung betrifft eine Gelenkverbindung zur Verbindung einer Schubstange mit einem Mitnehmer. Solche Verbindungen werden beispielsweise bei Brennkraftmaschinen im Bereich der Klappen- oder Schaltwellensteuerung eingesetzt. Sie dienen dazu, eine von einem Aktuator linear aufgebrachte Krafteinleitung in eine rotatorische Bewegung einer Schaltwelle oder Schaltklappe, wie zum Beispiel einer Drosselklappe, umzuwandein. Hierzu übt der Aktuator vorzugsweise elektrisch oder pneumatisch angetrieben eine lineare Verschiebung einer Schubstange aus, welche in einen Kugelkopf mündet. Dieser Kugelkopf greift in einen Mitnehmer ein, wobei der Mitnehmer mit der Schaltklappe oder der Schaltwelle verbunden ist. Durch die Lagerung des Mitnehmers konzentrisch zur drehenden Welle oder Schaltklappe findet in der Gelenkverbindung die Umsetzung von der transatorischen zur rotatorischen Bewegung statt.

Die DE 100 47 841 A1 zeigt eine Gelenkhebelvorrichtung mit einem Gelenkhebel und einem Anlenkungsbauteil, die über einen Gelenkbolzen und eine Gelenkbuchse drehbar miteinander verbunden sind. Der Gelenkbolzen weist hierbei ein Verriegelungselement und die Gelenkbuchse ein hierzu korrespondierendes Sperrelement mit Montageöffnung auf. Über ein Einbringen des Gelenkbolzens in die Gelenkbuchse und ein anschließendes Verdrehen stehen die Teile im Wirkkontakt.

Die Verbindung von Aktuator und Schaltwelle bzw. -klappe über eine Kugelkopfverbindung ist ebenfalls allgemein bekannt und wird so in einem Großteil der Brennkraftmaschinen angewendet. Nachteilig ist jedoch ein gewisses Spiel, welches sich prinzipbedingt aus der Kugelkopfverbindung ergibt bei der Betätigung der Schaltwelle bzw. - klappe. Im Moment der Anregung der Schubstange durch den Aktuator führt diese eine geringfügige Relativbewegung, ausgelöst durch ein geringfügiges Nachgeben der Kugelkopfverbindung, zum Mitnehmer aus. So erfolgt die Umsetzung der Schubstangenbewegungen in die rotatorische Schaltwellen- oder Schaltklappenbewegung nicht linear, sonder folgt einer gewissen Hysterese.

Der Erfindung liegt die Aufgabe zu Grunde, eine Gelenkverbindung zu schaffen, die es ermöglicht die Schubstangenbewegung ohne Anregungsprobleme und ohne Hysterese gleichförmig in eine Rotationsbewegung der Schaltwelle bzw. -klappe umzusetzen. Eine weitere Aufgabe besteht darin, die Verbindung zwischen den Teilen einfach und möglichst werkzeuglos herstellen zu können und eine Verteilung der wirkenden Kräfte zu erzielen. Diese Aufgaben werden durch die Merkmale des unabhängigen Anspruchs 1 gelöst.

### Vorteile der Erfindung

Der wesentliche Vorteil der Erfindung liegt darin, dass die Schubstange nun statt des Kugelkopfes an ihrer Verbindungsstelle einen zylindrischen Anteil und einen zumindest teilweise scheibenförmigen Anteil aufweist, welcher im Sinne eines Nut-Federprinzips mit dem korrespondierend gestalteten Mitnehmer verbunden ist. Der zylindrische Anteil am Verbindungsstück der Schubstange ist dabei in einer hierzu korrespondierenden zylindrischen Öffnung des Mitnehmers gelagert und der teilweise scheibenförmige Anteil des Schubstangenverbindungsstückes läuft in einer hierzu korrespondierenden im wesentlichen teilkreisförmigen Nut im Mitnehmer. Durch die nur teilweise Ausformung des scheibenförmigen Anteils und der kreisförmigen Nut lässt sich dieses System einfach und werkzeuglos ineinander stecken bzw. zerlegen. Es ist jedoch ebenso denkbar, die Verbindung durch die Anwendung der Montagespritzgießtechnik herstellen und so für eine nichtlösbare Verbindung zu sorgen. Der zylinderförmige Anteil des Schubstangenverbindungsstückes überträgt bei Anregung einen großen Teil der vom zylindrischen Anteil ausgehenden Radialkräfte auf den Mitnehmer, der restliche Anteil wird durch die Umfangsfläche des teilweise scheibenförmigen Anteils auf den Nutgrund des Mitnehmers übertragen. Ein axiales Ausweichen des Schubstangenverbindungsstückes bei Anregung wird durch die Feder-Nutlagerung von scheibenförmigen Anteil des Schubstangenverbindungsstückes und teilkreisförmiger Nut des Mitnehmers verhindert. Auf diese Art und Weise, wird eine Anregung über den Aktuator direkt und ohne Hysterese in eine rotatorische Bewegung ungewandelt.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt:
Figur 1 in prinzipiellen Darstellungen den bisherigen Stand der Technik, und
Figur 2 zeigt in prinzipiellen Darstellungen den Aufbau der erfindungsgemäßen Gelenkverbindung.

### Beschreibung der Ausführungsbeispiele

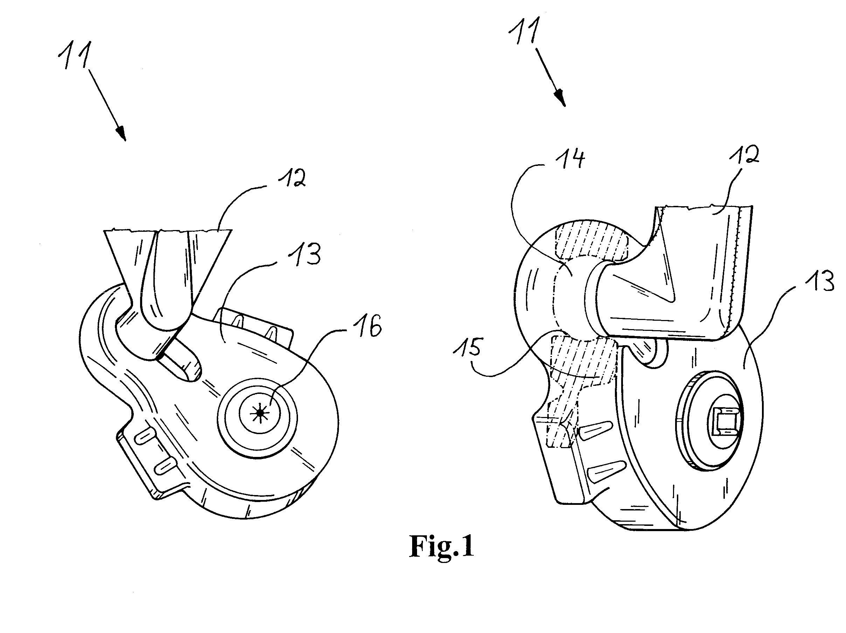

Die Figur 1 zeigt schematisch die im Stand der Technik bekannte Art der Gelenkverbindung 11 zur Verbindung einer Schubstange 12 mit einem Mitnehmer 13. In den Zeichnungen ist nur das Ende der Schubstange 12 zu erkennen, der nicht dargestellte Rest der Schubstange 12 ist mit einem Aktuator verbunden. Die Kraftanleitung über die Schubstange 12 erfolgt in der linken Zeichnung horizontal, wodurch eine rotierende Bewegung des Mitnehmers 13 hervorgerufen wird. Das Ende des Schubstangenverbindungsstückes weist einen Kugelkopf 14 auf, welcher über eine Art Schnappverbindung mit einer korrespondierenden Öffnung 15 im Mitnehmer 13 verbunden ist. Im Drehpunkt des Mitnehmers 13 ist eine Schraube 16 dargestellt, welche den Mitnehmer 13 mit einer Schaltwelle oder Schaltklappe verbindet. So wird durch eine Rotationsbewegung um den Mittelpunkt der Schraube 16 herum eine ebensolche Rotation der Schaltwelle oder Schaltklappe hervorgerufen. Hier ist gut zu erkennen, dass bei einer Anregung über den Akuator und Kraftanleitung durch die Schubstange 12 ein Verkippen oder Ausweichen der Schubstange 12 relativ zum Mitnehmer 13 möglich ist. Gerade im Moment der Kraftanregung entsteht eine Art Überschwinger der Schubstange 12 gegenüber des Mitnehmers 13 und der Mitnehmer 13 folgt der Bewegung der Schubstange 12 in einer Art Hysterese.

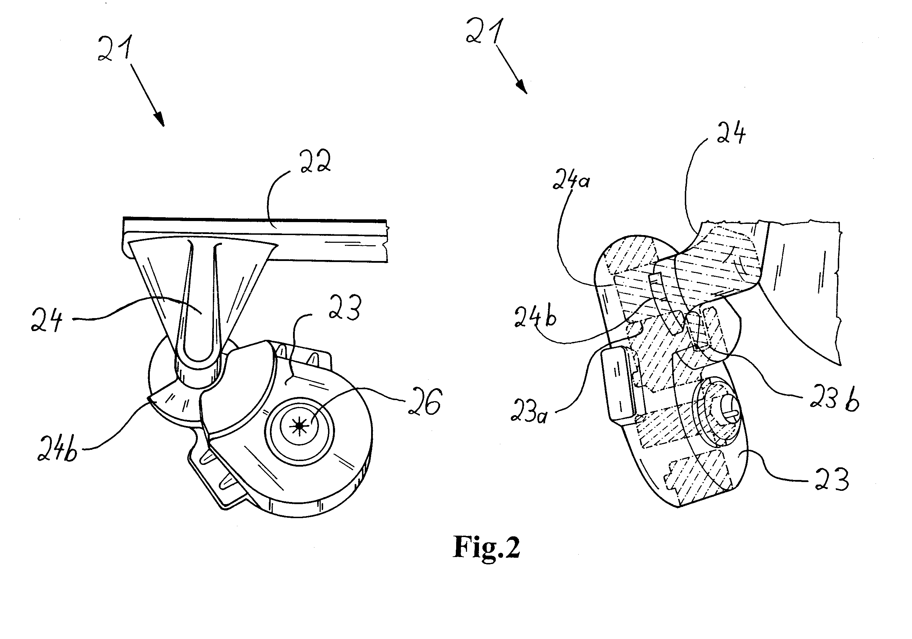

Die Figur 2 zeigt schematisch die erfindungsgemäße Lösung der Gelenkverbindung 21 zur Verbindung einer Schubstange 22 mit einem Mitnehmer 23. Hier ist im linken Bereich ein etwas größerer Ausschnitt der Schubstange 22 dargestellt, wodurch sich die Richtung der Kraftanleitung sehr gut erkennen lässt. Auch hier wird eine transatorische Kraftanleitung der Schubstange 22 in eine rotatorische Bewegung des Mitnehmers 23 umgesetzt. Der Mitnehmer 23 ist ebenso wie in Figur 1 über eine Schraube 26 mit einer dazugehörigen Schaltwelle oder Schaltklappe, welche konzentrisch im Mittelpunkt der Schraube 26 angeordnet ist, verbunden. Der Teil der Schubstange 22, der für die Verbindung mit dem Mitnehmer 23 verantwortlich ist, hier als Schubstangenverbindungsstück 24 gekennzeichnet, weist einen zylindrischen Anteil 24a und einen im wesentlichen scheibenförmigen Anteil 24b auf. Der außenliegende zylindrische Anteil 24b des Schubstangenverbindungsstückes 24 ist in einer zylinderförmigen Aussparung 23a des Mitnehmers23 spielfrei drehbar gelagert. Auf den zylindrischen Anteil 24a des Schubstangenverbindungsstückes 24 folgt ein scheibenförmiger Anteil 24b, welcher einen Teilausschnitt aus einer vollflächigen Scheibe darstellt. Dieser scheibenförmige Anteil 24b des Schubstangenverbindungsstückes 24 ist korrespondierend in einer teikreisförmigen Nut 23b des Mitnehmers 23 gelagert. Durch diese Kombination von zylindrischem Anteil 24a und scheibenförmigem Anteil 24b des Schubstangenverbindungsstückes 24 ist es möglich, die Kraft des Aktuators über die Schubstange 22 hysteresefrei auf den Mitnehmer 23 zu übertragen. Hierbei übernimmt der zylindrische Anteil 24a einen großen Teil der im Schubstangenverbindungsstück 24 auftretenden Radialkräfte, wohingegen der scheibenförmige Anteil 24b ein Großteil der Axialkräfte aufnimmt und so ein relatives Verschieben der Schubstange 22 gegenüber dem Mitnehmer 23 verhindert wird. Ein weiterer Vorteil ist eine Verhinderung eines winkeligen Kippens der Schubsstange 22 gegenüber dem Mitnehmer 23. Dieses wird durch die Anlageflächen des scheibenförmigen Anteils 24b des Schubstangenverbindungsstückes 24 in der teilkreisförmigen Nut 23b des Mitnehmers 23 erreicht. Schubstange 22 und Mitnehmer 23 lassen sich bevorzugt als Spritzgießteile herstellen, welches den Vorteil eines geringen Gewichts und einer einfachen Verarbeitung beinhaltet. Durch die nur teilweise Ausführung des scheibenförmigen Anteils 24b des Schubstangenverbindungsstücks 24 und der teilkreisförmigen Nut 23b ist es möglich beide Teile einfach ineinander einzusetzen und durch ein Verdrehen gegen ein Auseinanderfallen zu sichern. Im Betriebsbereich der Gelenkverbindung zwischen Schubstange 22 und Mitnehmer 23 gibt es so immer eine Überdeckung von teilkreisförmiger Nut 23b und scheibenförmigen Anteil 24b des Schubstangenverbindungsstückes 24, so dass es im Normalfall nicht möglich ist, dass sich die beiden Teile im Betrieb trennen. Falls eine Trennung jedoch notwendig ist, ist es einfach werkzeuglos möglich durch ein über den Betriebszustand hinaus geführtes Verdrehen des Mitnehmers 23 relativ zur Schubstange 22 den Überdeckungsbereich zu verlassen und so beide Teile voneinander trennen zu können. So bietet die erfindungsgemäße Gelenkverbindung 21 viele konstruktive und fertigungstechnische Vorteile und gewährleistet einen Betrieb der Gelenkverbindung 21 ohne jegliche Anregungsprobleme.

## Patentansprüche

1. Gelenkverbindung zur Verbindung einer Schubstange mit einem Mitnehmer, wobei die Schubstange mit einem Aktuator verbunden ist und der Mitnehmer korrespondierend mit wenigstens einer Schaltklappe oder -welle verbunden ist, **dadurch gekennzeichnet, dass** ein Schubstangenverbindungsstück im Verbindungspunkt mit dem Mitnehmer zumindest teilweise scheibenförmig gestaltet ist und der Mitnehmer am Verbindungspunkt mit der Schubstange korrespondierend zum Schu b-stangenverbindungsstück geformt ist, wobei ein zylindrischer Anteil des Schubstangenverbindungsstückes im Mitnehmer gelagert ist und der zumindest teilweise scheibenförmige Anteil des Schubstangenverbindungsstückes in eine entsprechend, geformte Nut im Mitnehmer, die sich über einen Winkelbereich um die Lagerstelle für den zylindrischen Anteil des Schubstangenverbindungstückes erstreckt, eingreift, so dass die Schubstange radial I und axial gegen ein relatives Verschieben gegenüber dem Mitnehmer gesichert ist.
